Europäisches Patentamt

European Patent Office

Office européen des brevets

(11) Publication number: **0 167 268**
**A2**

# (12) EUROPEAN PATENT APPLICATION

(21) Application number: **85303743.0**

(22) Date of filing: **29.05.85**

(51) Int. Cl.⁴: **F 16 K 11/02**

(30) Priority: **25.06.84 US 624115**

(43) Date of publication of application:
**08.01.86 Bulletin 86/2**

(84) Designated Contracting States:
**DE FR GB IT NL SE**

(71) Applicant: **GENERAL MOTORS CORPORATION**
General Motors Building 3044 West Grand Boulevard
Detroit Michigan 48202(US)

(72) Inventor: **Hoffman, Donald Edward**
78 Willowcrest Drive
West Seneca New York 14224(US)

(72) Inventor: **McDonald, David Bradley**
6430 Tonawanda Creek Road
Lockport New York 14094(US)

(74) Representative: **Breakwell, John Neil Bower et al,**
GM Patent Section Luton Office (F6) P.O. Box No. 3
Kimpton Road
Luton Beds. LU2 0SY(GB)

(54) **Rotary air valve.**

(57) A rotary air valve is mounted in a case (10) for rotary movement about an axis (20) to close a pair of openings (34,36) and has a flexible elastomeric seal (52) that flexibly engages one or other of a pair of curved sealing surfaces (40,42) on the case to seal the respective opening.

The sealing surfaces have radii of curvature whose axes (48,50) are offset from the axis for the valve, so that a predetermined contact pressure is established along the seal at the respective curved sealing surface to tightly seal the associated opening in the closed condition, but the contact pressure diminishes to zero immediately the valve is rotated to open the opening, thereafter permitting further opening movement of the valve uninhibited by contact between the seal and the sealing surfaces.

Fig.1

EP 0 167 268 A2

0167268
JNBB/1689

ROTARY AIR VALVE

This invention relates to a rotary air valve as specified in the preamble of claim 1.

In rotary air valves such as are used in vehicle air conditioning, heating and ventilating systems, the periphery of the rotary air valve should provide a seal against the surrounding case (housing) in a consistent manner with a minimum of effort. However, the peripheral sealing surface of a rotary air valve normally makes sliding contact, as compared with the face-to-face contact of a flap valve, so making it difficult to control the contact pressure between the seal surfaces and achieve a minimum of friction. Typically, seal materials such as plastic foam, felt, wool pile and rubber are utilised in combination with various retainers in an attempt to control the contact pressure between the sealing surfaces.

However, the complexity of such combination designs involves additional space, and is costly and gives inconsistent sealing and frictional characteristics under various climatic conditions. For example, the different expansion characteristics of the valve, the case and the seals at temperature extremes causes inconsistent seal performance, particularly in certain low-temperature situations, in which it is possible for the valve to freeze in position. The functional problem of the rotary valve in turn causes high control lever effort and potential overload of the operating mechanism of the valve.

The present invention is concerned with solving these problems in a simple, reliable low-cost manner by the use of a rotary air valve having an improved sealing arrangement.

To this end a rotary air valve in accordance with the present invention is characterised by the features specified in the characterising portion of claim 1.

In a specific embodiment of a rotary air valve in accordance with the present invention, the sealing arrangement is such that the curved sealing surface on the valve case, instead of, as is normal, being concentric with the valve axis, has a radius of curvature whose axis is offset from that of the valve. A flexible elastomeric seal is mounted on the periphery of the rotary air valve and extends along the two arcuate side edges and two opposite straight end edges thereof. Rotary movement of the valve, because of the offset axis of the sealing surface on the case, thereby carries the arcuate side seal portions away from or towards, rather than along, the curved sealing surface of the case while bringing the end seal portions into or out of abutting engagement with the sealing surface of the case. This unique geometrical relationship between the valve seal assembly and the sealing surface of the case establishes a predeterminable, consistently controlled contact pressure along the peripheral sealing arrangement effective to tightly seal the valve opening when the valve is rotated to its closed position, but to diminish to zero immediately the valve is rotated to open it, to thereafter permit further opening movement of the valve uninhibited by friction of the peripheral sealing arrangement. This both eliminates the described problems of conventional peripheral seal arrangements on rotary valves and provides seal-control lever efforts comparable with current flap valve arrangements.

In the drawings:

Figure 1 is a top plan view showing a portion of a vehicle air conditioning, heating and ventilating system incorporating a preferred embodiment of a rotary air valve with seal arrangement in accordance with the present invention;

Figure 2 is a sectional view, with parts in elevation, on the line 2--2 of Figure 1, in the direction of the arrows;

Figure 3 is a sectional view on the line 3--3 of Figure 2, in the direction of the arrows, showing the rotary air valve in one extreme position;

Figure 4 is a view similar to Figure 3 but showing the rotary air valve in a mid-position; and

Figure 5 is a view similar to Figure 3 but showing the rotary air valve in its other extreme position.

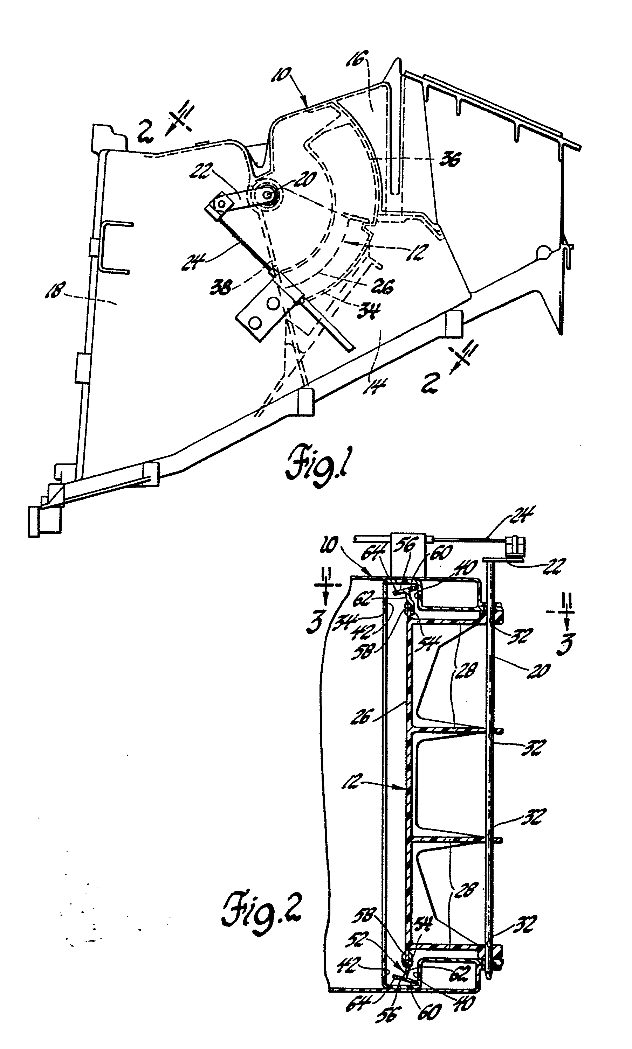

With reference now to Figures 1 to 3 of the drawings, there is shown a housing case 10 forming a portion of a vehicle air conditioning, heating and ventilating system. A rotary air valve 12 mounted in the case 10 provides air temperature control in the system by controlling the relative amounts of hot air in a duct 14 and cold air in a duct 16 that are allowed to pass through to a temperature-regulated supply duct 18, from which air at the resulting controlled temperature is distributed by means of a conventional arrangement (not shown) to the passenger space in the vehicle and to the windshield (windscreen) for defrosting.

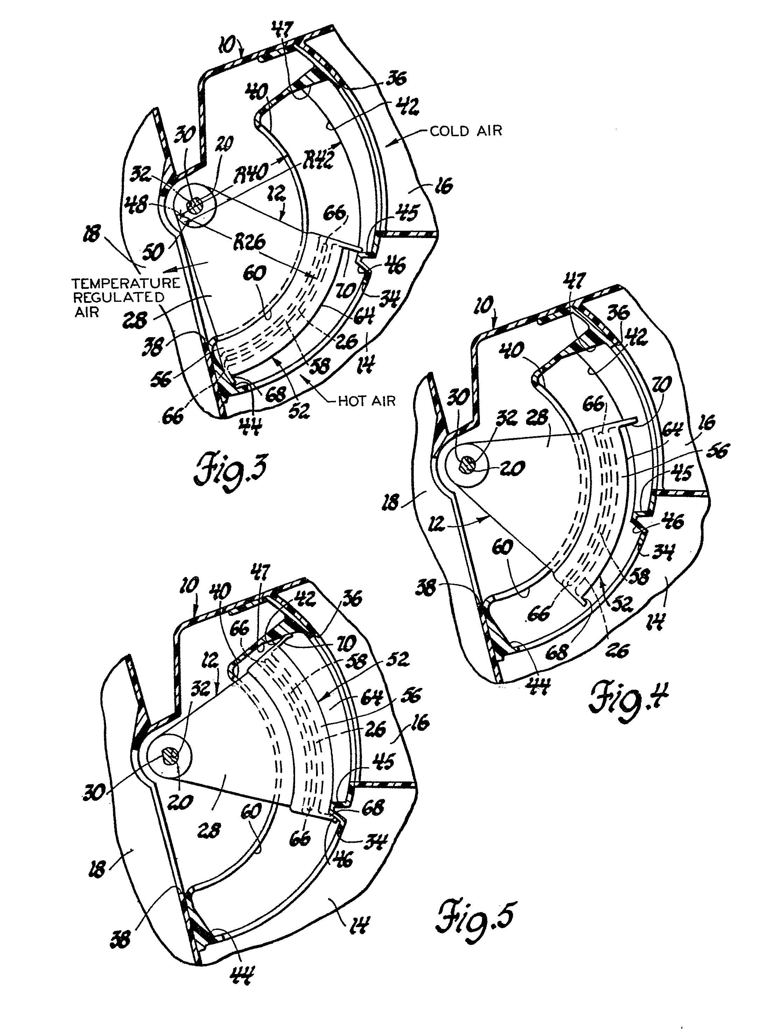

The rotary air valve 12 is mounted in the case 10 on a shaft 20 the opposite ends of which are journalled in opposite sides of the case, as shown in Figure 2. One end of the shaft 20 is connected to a lever 22, which in turn is connected by means of a sheathed wire 24 to a hand lever, not shown, that is situated in the passenger compartment of the vehicle and is manually controlled to adjust the air valve to give the desired air temperature.

So far as concerns the valve details, the rotary air valve 12 is shown as being a one-piece, plastics-moulded part of thin-wall, uniform-thickness design having a cylindrical valve face 26 and four pie-shaped (sector-like) radially inwardly extending arms 28 by means of which the valve is connected to the shaft 20 by the use of a flat 30 on the shaft and a conforming hole 32 in the inner end of each of the arms 28 (see Figure 3). One arm 28 is located at each side of the valve, and the remaining two are intermediately located arms which are equally spaced across the width of the valve, to not only provide for the pivotal support but also provide strength reinforcement.

The case 10 is formed with a valve opening 34 for the hot air in the duct 14 and an adjacent valve opening 36 for the cold air in the duct 16, and the cylindrical valve face 26 is sized to cover one or other of the openings 34 and 36 when the valve is moved to one or other of its two extreme positions. The one extreme position is that shown in Figure 3, in which the cylindrical valve face 26 covers the hot-air opening 34, and the other extreme position is that shown in Figure 5, in which the cylindrical valve face 26 covers the cold-air opening 36. Intermediate these two extreme positions, the cylindrical valve face 26 is positionable to partially cover both of the openings 34 and 36, as shown in Figure 4, to provide a continuously (steplessly) proportioned cold and hot air mixture, that is delivered through an opening 38 in the case 10 to the temperature-regulated supply duct 18.

Both of the extreme positions of the valve face 26 are thus closed positions, in which sealing about the periphery of the cylindrical valve face 26 is required against the surrounding case in a consistent manner with a minimum of effort, as already discussed. To this end, the cylindrical valve face 26 has a radius R26, and the case 10 is formed along the opposite sides and inwardly of the two duct openings 34 and 36 with radially outwardly facing co-cylindrical sealing surfaces 40 for the hot air duct 14 and radially inwardly facing co-cylindrical sealing surfaces 42 for the cold air duct 16 (see Figures 2 and 3). The sealing surface of the case 10 is completed by two radially-projecting, axially-extending end sealing surfaces 44 and 45 inwardly of the opening 34, and likewise two radially-projecting, axially-extending end sealing surfaces 46 and 47 inwardly of the other opening 36 (see Figure 3).

In conformity with the present invention, the centres of respective radii R40 and R42 for the curved sealing surfaces 40 and 42 are not on the axis of the shaft 20 but are offset therefrom at axes 48 and 50 respectively as shown in Figure 3, so that as the valve rotates from either of the closed positions to an open position the curved valve face 26 lifts or moves away from the respective curved sealing surfaces 40 and 42 rather than sliding therealong.

Sealing of the valve is provided by a preferably one-piece moulded seal 52 of flexible elastomeric material such as rubber having an inwardly facing groove 54 by means of which it is received over and retained along the peripheral edge of the valve face 26 completely thereabout. For sealing with the curved sealing surfaces 40 and 42 of the case 10, the seal 52 is formed with a flexible T-shaped rim 56 along the arcuately curved side edges 58 of the cylindrical valve face 26 (see Figures 2 to 5). The seal rim 56 has one extension 60 which extends perpendicularly from a cantilevered portion 62 of the seal and radially inwardly towards the sealing surface 40, and another extension 64 which also extends perpendicularly from the cantilevered seal portion 62 but radially outwardly towards the other sealing surface 42. For sealing with the respective end sealing surfaces 44, 46 and 45, 47 of the case 10, the seal is formed at the two axially-extending straight edges 66 of the valve face with respective radially outwardly-projecting extensions 68 and 70, which are thus both mounted in cantilever manner.

With the valve 12 thus mounted for rotary movement about an axis offset from those of the sealing surfaces 40 and 42, the valve when rotated clockwise into the Figure 3 position to close the opening 34 causes the edge of the two curved side seal extensions 60 to contact along their length against the respective radially outwardly facing curved sealing surfaces 40 on the duct, while the one end seal extension 68 engages the end sealing surface 44 of the case and the other end seal extension 70 engages the end sealing surface 45 of the case.

The seal 52 is sized according to the geometrical relationship between the valve face 26 and the sealing surfaces 40, 44 and 45 so that the cantilever portion 62 of the curved seal extensions 60 at the sides of the seal 52 and the projecting straight seal extensions 68 and 70 at the ends of the seal 52 flex when moved to this closed valve position, to thereby tightly seal the air duct opening 34 with a predetermined contact pressure. Then when the valve is pivoted in the counterclockwise direction as viewed in Figure 4, the two curved seal extensions 60 lift rather than slide off the two curved side sealing surfaces 40 of the case, and the two straight sealing portions 68 and 70 simultaneously lift off the respective end sealing surfaces 44 and 45 of the case, so that the effort to rotate the valve 12 diminishes to substantially zero (i.e. with only the bearing friction at the shaft 20) immediately the valve is rotated to open the hot-air duct opening 34 while starting to close the cold-air duct opening 36. Then as the valve approaches the other extreme position closing the cold-air duct opening 36, as shown in Figure 5, the two end seal extensions 68 and 70 engage the corresponding sealing surfaces 46 and 47 on the case, and the curved seal portions 64 move into flexed engagement along their length with the opposite sealing surfaces 42 on the case to tightly seal the cold-air duct opening 36 in the same manner as previously described for the hot-air duct opening 34.

Thus, with the present invention the geometrical relationship of the valve-seal assembly to the case provides controlled seal contact pressure at both of the closed valve positions, with zero seal pressure in the mid-range of valve travel, thereby eliminating those problems normally associated with rotary air valves which have sliding seal contact, while providing valve-seal control lever effort comparable to current flap-type (flat-type) valve systems. Furthermore, by the valve pulling away from the sealing surface as the travel increases, the likelihood of the valve freezing to the seat or sealing surface under low-temperature conditions is greatly reduced.

Moreover, the seal design allows a single rotary air valve to seal multiple openings, resulting in a simple and compact assembly.

Claims:

1. A rotary air valve mounted in a case (10) for rotary movement about an axis (20) and having a cylindrical valve face (26) for selectively closing a pair of adjacent openings (34 and 36) for respective ones of a pair of air ducts (14 and 16), characterised in that flexible elastomeric peripheral seal means (52) is mounted on the periphery of the valve face (26) for flexibly engaging separate oppositely facing curved sealing surfaces (40 and 42) on the case (10) extending along the openings (34 and 36) to seal the openings (34 and 36) when the valve face (26) closes the same, the sealing surfaces (40 and 42) having radii of curvature (R40 and R42) whose axes (48 and 50) are parallel and offset from the axis (20) of the valve face (26) so that the valve face (26) seats around one of the openings (34 and 36) at a time and lifts thereoff and seats around the other of the openings (34 and 36) in response to rotary movement of the valve (12) and so that a predetermined contact pressure is established along the seal means (52) at the sealing surfaces (40 and 42) to tightly seal each of the openings (34 and 36) when the valve (12) closes the same but the contact pressure diminishes to zero immediately the valve (12) is rotated to open the same, to thereafter permit further opening of the valve (12) and rotary movement thereof to the other of the openings (34 and 36) uninhibited by contact between the seal means (52) and the sealing surfaces (40 and 42).

2. A rotary air valve according to claim 1, characterised in that the seal means (52) is flexibly engageable with both straight and curved sealing surfaces (40 and 42) on the case (10) for sealing the openings (34 and 36) when the valve face (26) closes the same, the curved sealing surfaces (40 and 42) having a radius of curvature (R40,R42) whose axis (48,50) is parallel to and offset from the axis (20) of the valve (12) so that as the seal means (52) engages the straight sealing surfaces (40 and 42) the said predetermined contact pressure is also established along the seal means (52) at the curved sealing surfaces (40 and 42).

3. A rotary air valve according to claim 1 or 2, characterised in that for sealing purposes the seal means (52) is flexibly engageable with both straight and co-cylindrical sealing surfaces (40 and 42) as aforesaid on the case (10), the co-cylindrical sealing surfaces (40 and 42) having a radius of curvature (R40,R42) whose axis (48,50) is parallel to and offset from the axis (20) of the valve (12).

Fig.1

Fig.2

0167268

COLD AIR

TEMPERATURE REGULATED AIR

HOT AIR

Fig.3

Fig.4

Fig.5